# EUROPEAN PATENT APPLICATION

(11) **EP 1 284 576 A2**
(43) Date of publication of application: **19.02.2003**
(21) Application number: 02255431.5
(22) Date of filing: 02.08.2002
(51) Int. Cl.: H04N 7/16

(54) **Improvements in or relating to communication networks and methods of distributing information around the network**

(30) Priority: 17.08.2001 GB 0120134
(71) Applicant: Nokia Corporation, 02150 Espoo (FI)
(72) Inventor: Altonen, Janne, 20900 Turku (FI)
(74) Representative: Read, Matthew Charles

(57) **Abstract**

The invention provides a communications network comprising one or more network devices arranged to distribute items of information content around the network to end user terminals connected to the network, wherein the network is arranged to monitor the real time end user popularity of individual items of information content and wherein the network is arranged to provide an opportunity to instantaneously change the information provided to end user terminals based on the real time end user popularity of an item of information content.

## Description

The invention relates to communications networks such as cellular telephone networks, broadcast radio/television transmission networks, computer networks, or a combination thereof. Such networks are provided to distribute information content to end users, and the invention also relates to methods of providing information content to the end user.

The development of communications networks has resulted in a large volume of information being available to network users. However, this large volume of information has also made it increasingly difficult for a user to be aware of, and quickly access, any potentially relevant information. This is particularly problematic when information is transmitted through the communications network periodically in time slots. Take the example of subscribers to a digital TV service. The service provides a large number of channels each used to simultaneously transmit programs in parallel. In one example, a user may have discussed program Z, which is to be transmitted on channel 26 at a particular time slot, with a number of colleagues at work. However, it may occur that prior to the commencement of the time slot for program Z, the user begins to watch a program A on channel 1, which overlaps the time slot for program Z. In such a case, the user may forget to switch over and watch program Z on channel 26, and thus not be informed of the issues raised in program Z for a subsequent discussion with work colleagues.

The large volume of information available to end users will also mean that, for a given total audience size at any one particular time and with all other things being equal, the audience available for each distinct piece of information is reduced. Many information distribution services generate revenue by providing advertising, and advertising becomes increasingly cost effect if it is provided to a large audience, particularly if that audience is a targeted audience of potential consumers likely to have a particular interest in the product/service of the advertisement. Accordingly, a reduced audience size results in less cost-effective advertising. Again, take the example of a digital TV service. Prior to the introduction of such services, the TV audience would have been split between a comparatively low number of channels. However, following the advent of this service, the total audience is split between a much larger number of channels and, with all other things being equal, the audience for each program is reduced. In such cases, it would be less cost effective to provide advertising to such a dispersed audience, and companies selling advertising time, such as TV broadcasters, would find it increasingly difficult to generate advertising revenues.

To address this, market research is conducted. For example, TV broadcasters have so-called standard reference families that are used to measure popularity of programs. The broadcaster collects the information after the show and uses this to analyze pricing for the advertisements for the next time that they show a similar type of program. In the case of popular TV programs that are known to have a reliable following, e.g. The Simpson's or the News, pricing may be relatively straightforward. However, pricing is not easily determined for one-off programs such as documentaries or movies, or those programs shown using a Pay-per-View facility. This is because it is difficult to predict audience size when there is limited historical basis for making the prediction. This is more problematic in the case of a user-generated program, for example a film created by a group of students, which is made available for transmission through, for example, the World Wide Web. In this case, it will be extremely difficult to pre-predict the demand for the film. In certain cases, it is possible to promote a broadcast show to generate interest prior to its transmission. This is comparatively easy when the content of the show is broadly known and financial resources are made available. However, in the case of user generated content, this may not be feasible and one can only easily advertise that there is a user generated content channel.

Accordingly, the present invention provides a communications network comprising one or more network devices arranged to distribute items of information content around the network to end user terminals connected to the network, wherein the network is arranged to monitor the real time end user popularity of individual items of information content and wherein the network is arranged to provide an opportunity to instantaneously change the information provided to end user terminals based on the real time end user popularity of an item of information content.

In this way, the network provides a real time active information content popularity feedback loop. Accordingly, utilisation of information content will be popularity driven, and users will be able to easily access popular information content. Estimation of popularity will no longer be required, and thus a more accurate way of calculating advertising revenue is provided.

The item of information content may be audio, visual or televisual in nature. The latter two categories may provide textual and/or graphical information content. The end user terminal may be a computer, a radio and/or TV (which may be portable), a mobile telephone or some combination thereof. The information content may be a computer file and may be transmitted using the IP. Of course, the communications network would be the appropriate communications network to handle the appropriate transmission types.

Real time end user popularity may be determined by measuring the real time number of end user terminals provided with/receiving respective items of information content. Real time popularity is instantaneous or live popularity i.e. is not historical. However, real time popularity may be defined by sampling an average of popularity over a period of time, which may be 5 seconds, 30 seconds, 1 minute, 5 minutes, 15 minutes or any multiples thereof i.e. pseudo-live. In the case of information content that has a transmission duration, the real time popularity may be preferably measured by averaging user interest over the duration of, or a proportion of, the transmission duration. Thus, in the case of a TV program which has a 1 hour duration, popularity may be measured over the first, second, third and fourth quarter of an hour and/or over the entire hour. The network is arranged to provide an opportunity to instantaneously change the information content on the end user terminal at the end of the or each sampling duration based on the popularity sampled. In this case, instantaneous change is defined as the ability to make an immediate change in the information content on the user terminal from the perspective of the user.

Although the communications networks of the present invention are not necessarily defined by geographical distribution, the communication networks of the present invention may be distributed around a building, a community, a city, district, country or worldwide. Furthermore, although the communications networks of the present invention may service a community which may be geographically linked, the community may also be linked by a common interest and/or may subscribe to a particular service, whether by payment or otherwise e.g. a internet newsgroup or subscribers to digital TV service. In such cases, the geographical distribution of the community would not be the defining character. In addition, the network devices making up the communications network according to the present invention may use any appropriate communication protocol, and the transmission paths between network devices may be by wired and/or wireless paths.

In one preferred embodiment, the network and/or the terminal is arranged to provide the user with the option of selecting one or more of the popular items of information content. The option may be provided by audio and/or visual means and the selection may be made by the actuation of a command function on the user terminal which may be voice or keypad actuation. In this way, end users are notified of popular items of information content and can, if they wish to do so, take the opportunity to change to the popular information content. Thus, the invention provides the means by which popularity rumours are circulated to a user audience.

For example, the communications network may be configured to send an alert transmission to the end user terminal to identify that one or more particular popular items of information content is/are currently available. As an example, the network may be arranged such that an alert transmission is sent when a threshold of more than 5% of the total audience is accessing a particular item of information content. The network and/or terminal may be arranged such that the alert transmission is sent upon initial network access or during prolonged use of the network by the user.

Real time popularity may be measured in terms of the real time absolute number of the audience accessing an item of information content. However, it may be based on a real time relative comparison with audience levels for other items of information content.

The real time user audience may be defined in terms of the total real time user audience across the network or in terms of the real time user audience with a particular user profile. The user profile may be based on one or a combination of more than one demographic user information such as gender, income, and employment and is not necessarily limited to the user profile of an individual but may be the user profile of a group of people who use the end user terminals e.g. a family. The user profile may also be based on user geographical region, user common interest or viewing habits.

The user profile may be stored in the end user terminal or within a network device and may be provided by the user. Particularly in the case of a user profile utilising viewer habits, this information may be sampled by the network during usage of the network by a user. In this way, the network learns the viewing habits of the user during use of the network by the user.

In another preferred embodiment, the communications network and/or terminal are configured to identify popular information content based on a user defined user profile. As an example, the network may be arranged such that an alert transmission is sent when a threshold of more that 5% of a particular user defined user profile audience is accessing a particular item of information content. In this way, popularity is user specific, at least to the degree defined. For example, a user defined user profile may be based on a common interest e.g. that of a newsgroup. The user profile may also be defined in terms of specific network users such that a user is notified when a threshold proportion of the specific network users access a particular item of information content. For example, in the aforementioned scenario, the user profile may include the individual work colleagues of the individual and thus the user would be alerted when a threshold number of work colleagues accessed a particular item of information content.

In a preferred embodiment, the network and/or the user terminal may be modified to initially provide the user profile of the popular item of information content to the user via the user terminal to aid the user in deciding whether to take up the opportunity. In this way, the user can consider the profile of users presently accessing the popular item of information prior to deciding whether to access the popular information content.

In another embodiment, the end user terminal and/or communications network may be configured to provide the popularity information to one or more particular network device(s). Thus, particular network devices are provided which are dedicated to monitor popularity of information content and provide the opportunity to change information content. Alternatively, these network devices may also provide other network functions.

Preferably, one or more of the network devices are configured to assess the popularity of information content and determine when it is appropriate to change the information content by providing advertising information content and, when appropriate, provide the advertising information content. Thus, regardless of the source of information content, popular items of information content will potentially receive advertising revenue. This will be particularly beneficial to user generated content.

Preferably, the network devices are configured to provide the advertising information content during an intermission in an item of information content. The intermission in information content may be pre-planned or may be actively arranged by the network devices. In the latter case, it will be possible to provide advertising information content during peak popularity periods that are assessed in real time by the network devices.

The network devices may be configured to provide the advertising information content by superimposing onto an item of information content e.g. in the form of a visual banner or an audio signal.

To determine when it is appropriate to provide advertising information content, the network devices may consider the absolute popularity of an item of information content e.g. if the audience reaches a specific number.

The relative popularity of the item of information content may also be considered e.g. to identify the most popular item of information content at any one particular time.

The user profile of an audience of an item of information content may also be considered. Thus, for example, when the audience user profile matches that of the particular advertising information content and subject to meeting the threshold popularity criterion, the advertising information content may be provided to users via their terminals. The user profile may include user spending habit information and also information relating to whether or not the user is an existing customer for a particular product/service.

In one preferred embodiment, the network devices have a number of items of advertising information content, and the network devices are configured to make a selection from the advertising information content based on the user profile of the audience. In this case, it will be possible to tailor the advertising in real time to the audience.

It would be preferable to configure the network devices to rotate the selection of advertising information content provided to users to periodically generate advertising revenue from each of the items of advertising information content.

It may also be preferable to arrange the network and/or terminals to provide advertising information content specifically to user terminals accessing the popular information content. In this way, advertising is focussed towards populist information content.

In one embodiment, the information content owner who is transmitting information content on the network may be provided with the real time popularity information. In this case, the information content owner is provided with the opportunity to change and adapt the information content transmission based on the real time popularity information provided by the network. For example, during a live transmission of a talk show, the information content owner can assess particularly popular sections of the show and change the content of the show to concentrate on these popular items.

The invention also encompasses corresponding methods of providing information content based on determining the popularity of information content as previously mentioned. In addition, the invention provides a network device arranged to distribute items of information content and a end user terminal arranged to receive information based on determining the popularity of information content as previously mentioned.

Specific embodiments of the present invention will now be described, by way of example only, with reference to the following figure in which :

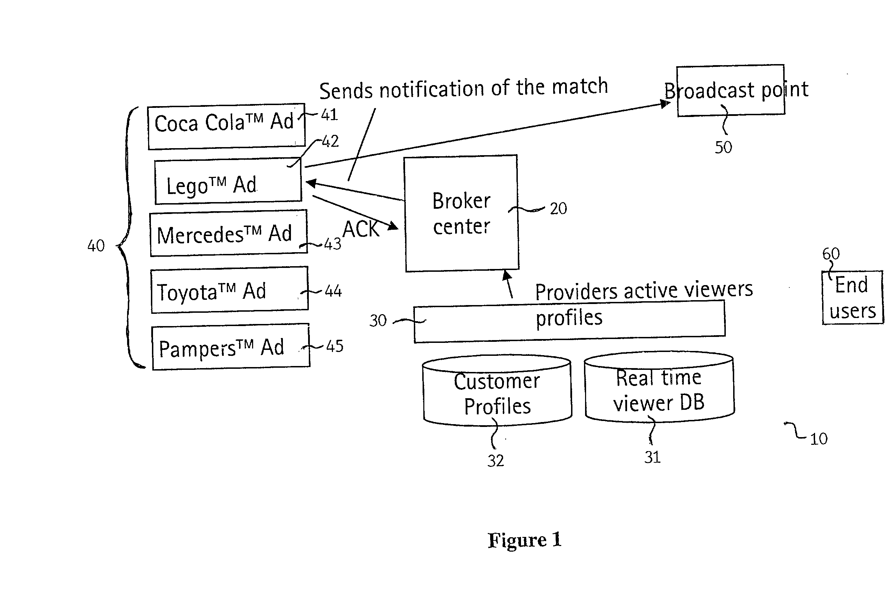

Figure 1 is a schematic representation of a communications network architecture according to one embodiment of the present invention.

The communications network 10 comprises a network device 20 to consider information content popularity information, a network device 30 which contains user profile information, a network device 40 which contains items of advertising information content 41, 42, 43, 44, 45, and a broadcasting device 50. End user terminals 60 are used to provide network information content to users. These terminals 60 receive transmissions from the broadcasting device 50 and provide popularity information of network information content to the network via the network device 30.

The network device 30 contains a database 31 comprising a list of all network customers together with their respective user profiles. The network device 30 also contains a database 32 which stores the user profiles for the real time network audience for a particular item of information content which is currently being transmitted by the network. Accordingly, when a user accesses an item of information content via their respective terminals 60, user profile information of the particular user is transferred from database 31 to database 32 and stored against the item of information content being accessed by the user.

The information in database 32 is accessed by network device 20. This device 20 considers the popularity of items of information content on the network by counting the number of users accessing a particular item of information content. This is assessed against criterion set by advertisers, these criterion also being stored on the device 20. If a particular criterion is met, then the network device 20 triggers the corresponding advertising information content to be provided from the network device 40 and to the broadcasting device 50 for transmission to end users.

The criterion set by advertisers may vary. For example, one advertiser may set a criterion that adverts should be transmitted if the audience level for an item of information content reaches 1 million. Another advertiser may set an additional criterion that the audience, or at least a significant proportion of the audience, should also have a particular user profile. Another may also place restrictions as to the price of a particular advertisement bandwidth.

In certain cases, advertisers may wish to provide the advertising information content only to the users having a particular profile. The advertising information content may also only be suitable for a particular user profile group e.g. adults. In this case, the network only transmits the advertising content to those users having the particular profile. This may be done by providing each end user terminal with a specific identification code for each user and transmitting the advertising information content to the terminals having the particular specific identification codes.

In another embodiment, the network device 20 is arranged to consider the popularity of items of information content and also provide the opportunity to change to and access popular information content. This opportunity is provided to users in visual or audio form via their network terminals 60, and the network terminals 60 are provided with one or more buttons to select the popular information content. In one version, the user is also provided with the typical user profile of users accessing the popular information content and thus this additional information aids the user in selecting whether to change to view the particular popular information content. Since normal human behaviour is to follow what others are doing, these embodiments enable end users to follow populist information content.

In a further embodiment, the user terminal 60 is used to program the user profile information stored in database 32. Accordingly, the user is able to set network triggers on what information content the user wishes to follow according to their own profile. One example of this is a teenaged end user who wants to follow the same TV programs that are followed by his peers in the neighbourhood.

## Claims

1. A communications network comprising one or more network devices arranged to distribute items of information content around the network to end user terminals connected to the network, wherein the network is arranged to monitor the real time end user popularity of individual items of information content and wherein the network is arranged to provide an opportunity to instantaneously change the information provided to end user terminals based on the real time end user popularity of an item of information content.

2. A communications network according to claim 1, wherein the network is such that the item of information content is audio, visual or televisual in nature.

3. A communications network according to claim 1 or claim 2, wherein the network is arranged such that the real time end user popularity is determined by measuring the real time number of end user terminals provided with/receiving respective items of information content.

4. A communications network according to any of the preceding claims, wherein the network is arranged such that the real time end user popularity is defined by sampling an average of popularity over a period of time.

5. A communications network according to any of the preceding claims, wherein the network is arranged such that the information content has a transmission duration, and the real time popularity is measured by averaging user interest over the duration of, or a proportion of, the transmission duration.

6. A communications network according to any of the preceding claims, wherein the network and/or the user terminal is/are arranged to provide the user with the option of selecting one or more of the popular items of information content.

7. A communications network according to any of the preceding claims, wherein the network and/or the user terminal is/are arranged to provide the option by audio and/or visual means, and the user selection of the option is provided by actuation of a command function on the user terminal.

8. A communications network according any of the preceding claims, wherein the communications network is configured to send an alert transmission to the end user terminal to identify that one or more particular popular items of information content is/are currently available.

9. A communications network as claimed in any of the preceding claims, wherein the network is arranged to provide an alert transmission when a threshold of the total audience accessing a particular item of information content is achieved.

10. A communications network as claimed in any of the preceding claims, wherein the network is arranged such that the real time end user popularity is measured in terms of the real time absolute number of the audience accessing a item of information content.

11. A communications network as claimed in any of the preceding claims, wherein the network is arranged such that the real time end user popularity is measured in terms of a real time relative comparison with audience levels for other items of information content.

12. A communications network as claimed in any of the preceding claims, wherein the network is arranged such that the real time user audience is defined in terms of the total real time user audience across the network.

13. A communications network as claimed in any of the preceding claims, wherein the network is arranged such that the real time user audience is defined in terms of the real time user audience with a particular user profile.

14. A communications network as claimed in any of the preceding claims, wherein the network is arranged such that the user profile is based on one or a combination of more than one demographic user information such as gender, income, and employment.

15. A communications network as claimed in any of the preceding claims, wherein the network is arranged such that the user profile is based on user geographical region, user common interest or viewing habits.

16. A communications network as claimed in any of the preceding claims, wherein the network is arranged to sample network usage of the network by a user to determine the user profile.

17. A communications network as claimed in any of the preceding claims, wherein the communications network and/or terminal are configured to identify popular information content based on a user defined user profile.

18. A communications network as claimed in any of the preceding claims, wherein the communications network and/or terminal are configured to initially provide the user profile of the popular item of information content to the user via the user terminal to aid the user in deciding whether to take up the opportunity.

19. A communications network as claimed in any of the preceding claims, wherein the communications network comprise one or more network devices arranged to assess the popularity of information content and determine when it is appropriate to change the information content by providing advertising information content, and when appropriate, provide the advertising information content.

20. A communications network as claimed in claim 19, wherein the or each network device is configured to provide the advertising information content during an intermission in an item of information content.

21. A communication network as claimed in claim 20, wherein the network is arranged such that the intermission in information content is actively arranged by the network devices to provide advertising information content during peak popularity periods.

22. A communications network according to claims 19-21, wherein the or each network device is configured to provide the advertising information content by superimposing onto an item of information content.

23. A communications network according to claims 19-22, wherein the or each network device is arranged to consider the absolute popularity of an item of information content to determine when it is appropriate to provide advertising information content.

24. A communications network according to claims 19-22, wherein the or each network device is arranged to consider the relative popularity of the item of information content to determine when it is appropriate to provide advertising information content.

25. A communications network according to claims 19-24, wherein the or each network device is arranged to consider the user profile of an audience of an item of information content to determine when it is appropriate to provide advertising information content.

26. A communications network according to claim 25, wherein the or each network device comprise a number of items of advertising information content, and the network devices are configured to make a selection from the advertising information content based on the user profile of the audience.

27. A communications network according to claim 26, wherein the or each network device is configured to rotate the selection of advertising information content provided to users to periodically generate advertising revenue from each of the items of advertising information content.

28. A communication network according to claims 19-27, wherein the network and/or terminals are configured to provide advertising information content specifically to user terminals accessing the popular information content.

29. A communications network according to any one of the preceding claims, wherein the communications network is arranged to provide the real time popularity information to a information content owner transmitting information content on the network.

30. A method of providing information content based on determining the real time popularity of individual items of information content and providing an opportunity to instantaneously change the information provided to end user terminals based on the real time end user popularity of an item of information content

31. A communications network as hereinbefore described and with reference to the accompanying figures.

32. A method of providing information content as hereinbefore described and with reference to the accompanying figures.

33. A network device arranged to distribute items of information content around a network to end user terminals connected to the network, wherein the network device is arranged to monitor a real time end user popularity of individual items of information content and wherein the network device is arranged to provide an opportunity to instantaneously change the information provided to end user terminals based on the real time end user popularity of an item of information content.

34. An end user terminal arranged to receive information content wherein the end user terminal comprises an interface to the communication network, the network comprising a network device arranged to distribute items of information content around a network to end user terminals connected to the network, wherein the network device is arranged to monitor a real time end user popularity of individual items of information content and wherein the network device is arranged to provide an opportunity to instantaneously change the information provided to end user terminals based on the real time end user popularity of an item of information content.
